# EUROPEAN PATENT SPECIFICATION

(11) **EP 4 689 019 B1**
(45) Date of publication and mention of the grant of the patent: **14.10.2026**
(21) Application number: 24720418.3
(22) Date of filing: 05.04.2024
(51) Int. Cl.: C10L 1/22

(54) **HYDROGEN SULPHIDE AND MERCAPTAN SCAVENGING ADDITIVE CONCENTRATE COMPRISING AN OXAZOLIDINE COMPOUND AND AN ALKOXYLATED AMINE**
SCHWEFELWASSERSTOFF UND MERCAPTAN ABFANGENDES ADDITIVKONZENTRAT MIT EINER OXAZOLIDINVERBINDUNG UND EINEM ALKOXYLIERTEN AMIN
CONCENTRÉ D'ADDITIF DE PIÉGEAGE DE SULFURE D'HYDROGÈNE ET DE MERCAPTANS COMPRENANT UN COMPOSÉ D'OXAZOLIDINE ET UNE AMINE ALCOXYLÉE

(30) Priority: 07.04.2023 EP 23305519
(43) Date of publication of application: 11.02.2026
(73) Proprietor: TotalEnergies OneTech, 92400 Courbevoie (FR)
(72) Inventor: TORT, Frédéric, 69360 SOLAIZE (FR); MONDKAR, Hemant Sunanda Surendra, 69360 SOLAIZE (FR)
(74) Representative: Casalonga
(86) International application number: PCT/EP2024/059356
(87) International publication number: WO 2024/209066

(56) References cited:
- WO-A1-2017/102693
- US-A1- 2019 016 966
- US-A1- 2021 197 116

## Description

The present invention relates to an additive concentrate useful for scavenging hydrogen sulphide and organic compounds comprising at least one sulfhydryl group, said additive concentrate comprises an oxazolidine compound and a particular additive chosen from alkoxylated amines.

The invention also relates to a composition comprising said additive concentrate and a liquid solvent.

The present invention also relates to the use of the additive concentrate or of the composition of the invention for scavenging hydrogen sulphide and/or organic compounds comprising at least one sulfhydryl group in a liquid or gaseous stream.

The invention also relates to the use of an alkoxylated amine for improving the efficiency of oxazolidine compounds in scavenging hydrogen sulphide and organic compounds comprising at least one sulfhydryl group in a liquid or gaseous stream.

The present invention also relates to a method for scavenging hydrogen sulphide and/or organic compounds comprising at least one sulfhydryl group comprising contacting a hydrocarbon stream such as crude oil, fuel or natural gas with the additive concentrate or with the composition of the invention.

Hydrogen sulphide (H₂S) is a colourless and fairly toxic, flammable and corrosive gas which has a characteristic odour at a very low concentration. Hydrogen sulphide dissolves in liquid and gaseous streams such as hydrocarbon and water streams and can also be present in the vapour phase above liquid streams as well as in hydrocarbon gas such as LPG and natural gas. The hydrogen sulphide emissions can be harmful to workers operating in the drilling, production, transport, storage, and processing of such streams. It would therefore be desirable for the workers' comfort and safety to reduce or even eliminate the hydrogen sulphide emissions during the handling of said products.

Legislation has been in place for years, imposing strict regulations on hydrogen sulphide levels of hydrocarbon streams in pipelines, in storage and shipping containers.

Similar problems arise with organic compounds comprising a sulfhydryl group (-SH) such as mercaptans R-SH, thiocarboxylic acids RC(O)SH, dithiocarboxylic acids RC(S)SH, with R denoting a hydrocarbon chain. Such sulfhydryl-containing compounds are very corrosive; and are likely to release hydrogen sulphide.

A variety of chemical scavengers are available to reduce the concentration of hydrogen sulphide and sulfhydryl-containing compounds in liquid and gaseous streams containing them, in particular aqueous streams and hydrocarbon streams such as gas, crude oils and refined products. Some of the most common methods for treating hydrogen sulphide consist in contacting them with a chemical scavenger such as compounds containing a triazine group, glyoxal, as well as metal-based scavengers. Glyoxal has been used extensively as hydrogen sulphide scavenger but suffers from a major drawback since aqueous glyoxal solutions are highly corrosive and cannot be used for a gas tower application. Triazines have recently become more common chemical scavengers used for treating hydrogen sulphide from hydrocarbon streams.

Other hydrogen sulphide scavengers have been developed, and among them scavengers based on oxazolidine, like 3,3'-methylenebis(5-methyloxazolidine), known as MBO. A method for scavenging hydrogen sulphide from sour hydrocarbon substrates has been described in WO 98/02501.

However, this technology requires an important contact time in order to be efficient in sulphur removal and thus involves injection of higher doses.

Formulations of MBO with promoters, also named boosters, have been developed to enhance the efficiency of MBO. For example, WO 2017/102693 describes a composition comprising MBO and one or more additive selected among urea, urea derivatives, amino acids, guanidine, guanidine derivatives or 1,2-diols.

Other promoters, such as polyethylene glycol-based promoters, have been described. While enhancing the H₂S scavenging performance of MBO, these compounds have a major drawback as they present a high viscosity and are solid at room temperature. Therefore, the compositions containing MBO combined with such promoters can hardly be used at cold temperatures nor be injected using high pressure systems due to their viscosity. US2021/197116 discloses scavenging compositions comprising altrnatively an alkoxylated amine or an oxazolidine.

There remains a continuous need for novel solutions for eliminating hydrogen sulphide and other compounds comprising a sulfhydryl group in an efficient, economic and safe manner.

The Applicant has now discovered that the combination in specific amounts of oxazolidine compounds with a particular additive chosen from alkoxylated amines was particularly efficient for scavenging hydrogen sulphide and unwanted organic compounds comprising at least one sulfhydryl group, even at very low temperature.

Therefore, the present application discloses an additive concentrate useful for scavenging hydrogen sulphide and mercaptans in hydrocarbon streams, said concentrate comprising at least one oxazolidine compound and at least one alkoxylated amine.

More particularly, the present invention as claimed relates to an additive concentrate useful for scavenging hydrogen sulphide and mercaptans in hydrocarbon streams, said concentrate comprising:
- at least one oxazolidine compound in an amount ranging from 50 to 98%wt relative to the total weight of the additive concentrate, and
- at least one alkoxylated amine in an amount ranging from 2 to 50%wt relative to the total weight of the additive concentrate.

The additive concentrate of the present invention allows achieving an improved scavenging of hydrogen sulphide and organic compounds comprising at least one sulfhydryl group in a short contact time. The improvement can be seen when the remaining amount of sulphur compounds in the stream is reduced and/or when the speed of the scavenging of sulphur compounds is increased when contacting the composition according to the invention with said stream.

The additive concentrate of the present invention allows a faster scavenging, i.e. the amount of sulphur compounds is decreased more rapidly than with prior art scavenging compositions.

Moreover, the compositions containing such scavenging additive concentrate of the invention show a viscosity compatible with injection thereof in high pressure systems and can be used at low working temperatures, such as temperatures below 10°C or even below -10°C.

The invention also relates to a composition comprising said additive concentrate and a liquid solvent.

The present invention also relates to the use of the additive concentrate or of the composition of the invention for scavenging hydrogen sulphide and/or organic compounds comprising at least one sulfhydryl group in a liquid or gaseous stream.

The invention also relates to the use of the alkoxylated amine additive for improving the efficiency of oxazolidine compounds in scavenging hydrogen sulphide and organic compounds comprising at least one sulfhydryl group in a liquid or gaseous stream.

The present invention also relates to a method for scavenging hydrogen sulphide and/or mercaptans comprising contacting a hydrocarbon stream such as crude oil, fuel or natural gas with the scavenging additive concentrate or the scavenging composition of the invention.

In the following, and at least one other indication, the limits of a value range are included within this range, particularly in the expressions "between" and "ranging from ... to ...".

Moreover, the expressions "at least one" and "at least" used in the present description are respectively equivalent to the expressions "one or more" and "more than or equal to".

Finally, in a manner known per se, C_{N} compound or group designates a compound or a group containing in its chemical structure N carbon atoms.

Within the meaning of the present invention:
- the term "acyclic alkyl" refers to an alkyl group which does not form part of a cycle,
- the term "acyclic alkenyl" refers to an alkenyl group which does not form part of a cycle,
- the term "cyclic alkyl" refers to a saturated cycloalkyl group, wherein the cycle can be optionally substituted by one or more linear or branched alkyl or alkenyl groups. Preferably, the cycle comprises 5 or 6 carbon atoms and the substituent(s) if any comprise(s) from 1 to 6 carbon atoms, preferably from 1 to 3 carbon atoms,
- the term "cyclic alkenyl" refers to an unsaturated cycloalkyl group, wherein the cycle comprising at least one unsaturation can be optionally substituted by one or more linear or branched alkyl or alkenyl groups. Preferably, the cycle comprises 5 or 6 carbon atoms and the substituent(s) if any comprise(s) from 1 to 6 carbon atoms, preferably from 1 to 3 carbon atoms.

### Oxazolidine compounds

The additive concentrate of the invention comprises at least one oxazolidine compound.

Within the meaning of the present invention, the expression "oxazolidine compound" refers to a compound comprising at least one oxazolidine cycle, said cycle being substituted or not substituted.

Preferably, the oxazolidine compound(s) is (are) selected from compounds comprising one oxazolidine cycle (i.e. mono-oxazolidines) or two oxazolidine cycles (i.e. bisoxazolidines).

Oxazolidine compounds useful in the present invention and comprising one oxazolidine cycle preferably correspond to the following formula (I): 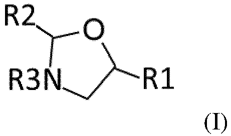
wherein R1 and R2, identical or different, are selected from a hydrogen atom and linear or branched, cyclic or acyclic, alkyl or alkenyl groups having from 1 to 6 carbon atoms, preferably from a hydrogen atom, a methyl and an ethyl group, and
R3 is selected from a hydrogen atom and linear or branched, cyclic or acyclic, saturated or unsaturated, aromatic or non aromatic hydrocarbon groups having from 1 to 30 carbon atoms, preferably from a hydrogen atom and from linear or branched, cyclic or acyclic, saturated or unsaturated, aromatic or non aromatic hydrocarbon groups having from 1 to 20 carbon atoms.

Preferably, R1 and R2, identical or different, are selected from a hydrogen atom and a methyl group.

According to a first preferred embodiment, R1 and R2 are identical and represent a hydrogen atom and R3 represents a hydrogen atom.

According to a second preferred embodiment, R1 represents a methyl group, R2 represents a hydrogen atom, and R3 represents a hydrogen atom.

According to a third preferred embodiment, R1 and R2 are identical and represent a hydrogen atom, and R3 is selected from linear or branched, cyclic or acyclic, saturated or unsaturated, aromatic or non aromatic hydrocarbon groups having from 1 to 20 carbon atoms.

Preferred mono-oxazolidine compounds are 1,3-oxazolidine, 5-methyloxazolidine, and 3-(C1-C20)alkyl-oxazolidines, which correspond to the following formulae:

| | |
|---|---|
| 1,3-Oxazolidine | 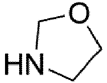 |
| 5-Methyloxazolidine | 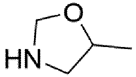 |
| 3-(C1-C20)Alkyl-Oxazolidines | 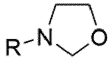 R=C1-C20 |

Oxazolidine compounds useful in the present invention and comprising two oxazolidine cycles preferably correspond to the following formula (II): 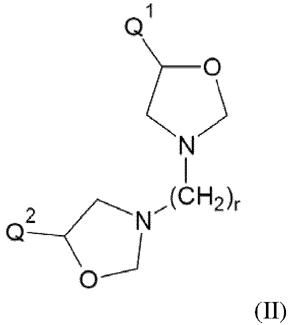 wherein:
- r is an integer ranging from 1 to 6, preferably from 1 to 2;
- Q¹ and Q², identical or different, are selected from a hydrogen atom and linear or branched, cyclic or acyclic, alkyl or alkenyl groups having from 1 to 6 carbon atoms, preferably from 1 to 2 carbon atoms.

Preferably, r denotes 1.

Preferred bisoxazolidine compounds are 3,3'-methylenebis(oxazolidine) and 3,3'-methylenebis(5-methyloxazolidine) (also known as MBO), which correspond to the following formulae:

| | |
|---|---|
| 3,3'-Methylenebis(oxazolidine) | 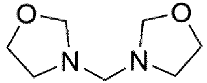 |
| 3,3'-Methylenebis(5-methyloxazolidine) (MBO) | 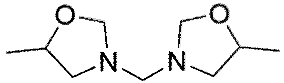 |

Preferably, the oxazolidine compound(s) is (are) selected from 1,3-oxazolidine, 5-methyloxazolidine, 3-(C1-C20)alkyl-oxazolidines, 3,3'-methylenebis(oxazolidine), 3,3'-methylenebis(5-methyloxazolidine) (MBO) and mixtures thereof.

The oxazolidine compound(s) is (are) present in an amount ranging from 50 to 98%wt, preferably from 60 to 80%wt, more preferably from 65 to 75%wt, even more preferably from 68 to 72%wt, relative to the total weight of the additive concentrate.

In a particular embodiment, the oxazolidine compound(s) chosen from mono-oxazolidines, bisoxazolidines and mixtures thereof are present in an amount ranging from 50 to 98%wt, preferably from 60 to 80%wt, more preferably from 65 to 75%wt, even more preferably from 68 to 72%wt, relative to the total weight of the additive concentrate.

In another particular embodiment, the oxazolidine compound(s) chosen from from 1,3-oxazolidine, 5-methyloxazolidine, 3-(C1-C20)alkyl-oxazolidines, 3,3'-methylenebis(oxazolidine), 3,3'-methylenebis(5-methyloxazolidine) (MBO) and mixtures thereof are present in an amount ranging from 50 to 98%wt, preferably from 60 to 80%wt, more preferably from 65 to 75%wt, even more preferably from 68 to 72%wt, relative to the total weight of the additive concentrate.

### Alkoxylated amines

The additive concentrate of the invention comprises at least one alkoxylated amine.

The alkoxylated amines preferably correspond to compounds of following formula (I): 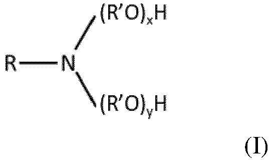 wherein:
- R represents a linear or branched hydrocarbon chain comprising from 1 to 30 carbon atoms, preferably from 6 to 30 carbon atoms, more preferably from 8 to 30 carbon atoms,
- R' represents an alkylene group comprising from 1 to 4 carbon atoms, preferably from 2 to 3 carbon atoms, more preferably R' represents an ethylene group or a propylene group, and
- x and y are numbers ranging from 0 to 15, with the proviso that x+y is within the range from 2 to 20, preferably from 5 to 15.

In a preferred embodiment, the alkoxylated amines are chosen from ethoxylated amines, that is to say amines of formula (I) above wherein R' represents an ethylene group, in particular from ethoxylated fatty amines, corresponding to the following general formula (II): 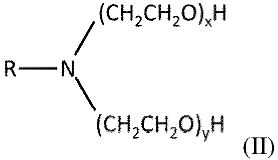 wherein R represents a linear or branched hydrocarbon chain comprising from 8 to 30 carbon atoms, preferably from 12 to 24 carbon atoms, and x+y is within the range from 2 to 20, preferably from 5 to 15.

Preferably, the alkoxylated amine(s) is (are) chosen from ethoxylated fatty amines of formula (II), more preferably from ethoxylated tallow amines containing an average number of ethoxy units ranging from 5 to 15 (5-15 EO), ethoxylated stearyl amines containing an average number of ethoxy units ranging from 5 to 15 (5-15 EO), ethoxylated coco amines containing an average number of ethoxy units ranging from 5 to 15 (5-15 EO), ethoxylated oleyl amines containing an average number of ethoxy units ranging from 2 to 10 (2-10 EO) and mixtures thereof.

Examples of particularly preferred compounds are ethoxylated tallow amine containing 5 ethoxy units (5 EO), ethoxylated tallow amine containing 10 ethoxy units (10 EO), ethoxylated stearyl amine containing 10 ethoxy units (10 EO), ethoxylated coco amine containing 10 ethoxy units (10 EO), ethoxylated oleyl amine containing 2 ethoxy units (2 EO), ethoxylated oleyl amine containing 5 ethoxy units (5 EO).

The alkoxylated amine(s) is (are) present in the additive concentrate of the invention in an amount ranging from 2 to 50%wt, preferably from 20 to 40%wt, more preferably from 25 to 35%wt, even more preferably from 28 to 32%wt, relative to the total weight of the additive concentrate.

Preferably, the ethoxylated fatty amine(s) is (are) present in an amount ranging from 2 to 50%wt, preferably from 20 to 40%wt, more preferably from 25 to 35%wt, even more preferably from 28 to 32%wt, relative to the total weight of the additive concentrate.

Preferably, the ethoxylated fatty amine(s) chosen from ethoxylated tallow amines (5-15EO), ethoxylated stearyl amines (5-15EO), ethoxylated coco amines (5-15EO), ethoxylated oleyl amines (2-10 EO) and mixtures thereof, is (are) present in an amount ranging from 2 to 50%wt, preferably from 20 to 40%wt, more preferably from 25 to 35%wt, even more preferably from 28 to 32%wt, relative to the total weight of the additive concentrate.

Preferably, the ethoxylated fatty amine(s) chosen from ethoxylated tallow amine containing 5 ethoxy units (5 EO), ethoxylated tallow amine containing 10 ethoxy units (10 EO), ethoxylated stearyl amine containing 10 ethoxy units (10 EO), ethoxylated coco amine containing 10 ethoxy units (10 EO), ethoxylated oleyl amine containing 2 ethoxy units (2 EO), ethoxylated oleyl amine containing 5 ethoxy units (5 EO), and mixtures thereof, is (are) present in an amount ranging from 2 to 50%wt, preferably from 20 to 40%wt, more preferably from 25 to 35%wt, even more preferably from 28 to 32%wt, relative to the total weight of the additive concentrate.

Preferably, the weight ratio between the total amount of oxazolidine compound(s) and the total amount of alkoxylated amine(s) is at least 1, preferably at least 1.5. According to a preferred embodiment, the weight ratio between the total amount of oxazolidine compound(s) and the total amount of alkoxylated amine(s) is comprised between 1 to 20, in particular between 1 to 15, in particular between 1 and 10, preferably between 1 and 4, and more preferably between 2 and 3.

According to an embodiment, the weight ratio between the total amount of mono-oxazolidines and bisoxazolidines and the total amount of alkoxylated amine(s) is at least 1, preferably at least 1.5. According to a preferred embodiment, the weight ratio between the total amount of mono-oxazolidines and bisoxazolidines and the total amount of alkoxylated amine(s) is comprised between 1 to 20, in particular between 1 to 15, in particular between 1 and 10, preferably between 1 and 4, and more preferably between 2 and 3.

According to another embodiment, the weight ratio between the total amount of mono-oxazolidines and bisoxazolidines and the total amount of ethoxylated fatty amine(s) is at least 1, preferably at least 1.5. According to a preferred embodiment, the weight ratio between the total amount of mono-oxazolidines and bisoxazolidines and the total amount of ethoxylated fatty amine(s) is comprised between 1 to 20, in particular between 1 to 15, in particular between 1 and 10, preferably between 1 and 4, and more preferably between 2 and 3.

The additive concentrate of the invention may be mixed with a liquid solvent. Preferably, the additive concentrate of the invention is mixed with a solvent.

Therefore, another object of the invention is a composition comprising an additive concentrate as defined above and at least one liquid solvent.

### Liquid solvents

By liquid, it is meant a solvent which is in liquid form at ambient temperature (20°C) and atmospheric pressure (1,013.10⁵ Pa).

According to a preferred embodiment, the solvent(s) is (are) selected from organic liquid solvents.

Such solvents may in particular be chosen from poly alkyl ethers, aliphatic hydrocarbons such as alkanes, aromatic solvents such as aromatic hydrocarbons and aromatic hetero-compounds, and mixtures thereof.

Preferred organic solvents are chosen from aromatic solvents, such as N-methylpyrrolidone, xylene, toluene, benzene, heavy aromatic naphta; and poly oxyalkyl ethers such as butyl carbitol (diethylene glycol monobutyl ether); as well as mixtures thereof.

Other preferred organic solvents include those derived from biomass, such as oils of vegetable origin. A particularly preferred solvent is cashew nutshell liquid, also known as CSNL, which is a widely available vegetable oil derived from cashew nut shell. CNSL can be used as a mixture with any other solvent such as those described herein.

The choice of the solvent mainly depends on the final use of the composition. When the composition is intended to be used for scavenging hydrogen sulphide and/or sulfhydryl-containing compounds in an aqueous stream, an organic solvent soluble in water may be preferred. When the composition is intended to be used for scavenging hydrogen sulphide and/or sulfhydryl-containing compounds in a hydrocarbon stream, an organic solvent will be preferred.

When the stream is a mixture of water and hydrocarbons (such as a mixture of crude oil and brine) a solvent having a dual solubility, i.e. a water solubility and a solubility in hydrocarbons, can be preferred. Poly alkyl ethers such as butyl carbitol are preferred solvents since they have such a dual solubility.

The composition of the invention advantageously contains an amount of solvent ranging from 5 to 50% by weight, preferably from 10 to 40%wt, more preferably from 25 to 30%wt, relative to the total weight of the composition.

The composition of the invention advantageously contains an amount of the additive concentrate of the invention ranging from 50 to 95% by weight, preferably from 60 to 90%wt, more preferably from 70 to 75%wt, relative to the total weight of the composition.

According to an embodiment of the invention, the composition comprises, preferably consists of:
- from 30 to 80%wt, preferably from 35 to 75%wt, more preferably from 40 to 70%wt, of mono-oxazolidines, bisoxazolidines and mixtures thereof,
- from 15 to 30%wt, preferably from 17 to 25%wt, more preferably from 17 to 23%wt, of alkoxylated amines,
- from 5 to 50%wt, preferably from 10 to 40%wt, more preferably from 25 to 30%wt of solvent(s),
relative to the total weight of the composition.

According to another embodiment of the invention, the composition comprises, preferably consists of:
- from 30 to 80%wt, preferably from 35 to 75%wt, more preferably from 40 to 70%wt, of mono-oxazolidines, bisoxazolidines and mixtures thereof,
- from 15 to 30%wt, preferably from 17 to 25%wt, more preferably from 17 to 23%wt, of alkoxylated amines,
- from 5 to 50%wt, preferably from 10 to 40%wt, more preferably from 25 to 30%wt of solvent(s),

relative to the total weight of the composition,
wherein the weight ratio between the content of the mono-oxazolidines, bisoxazolidines and the content of the alkoxylated amine(s) is comprised between 1.5 and 3, preferably between 2 and 2.5.

### Defoamer

The composition of the invention (ie the composition comprising the concentrate additive and the solvent) may further comprise art least one defoamer, preferably at least one silicone-based defoamer.

The defoamers are preferably chosen from polydimethylsiloxane polymers, more preferably from grafted polydimethylsiloxane polymers.

The composition of the invention advantageously contains an amount of defoamer ranging from 0.1 to 2% by weight, relative to the total weight of the composition.

### Use

The present invention also encompasses the use of an additive concentrate or of a composition as described above for scavenging hydrogen sulphide and/or organic compounds comprising at least one sulfhydryl group in a liquid or gaseous stream.

The organic compounds comprising at least one sulfhydryl group are especially chosen from mercaptans, thiocarboxylic acids and dithiocarboxylic acids.

The liquid or gaseous stream may be a monophasic stream such as in particular an aqueous stream or an organic stream, or a multiphasic stream containing both water and hydrocarbons (such as for instance oil/water or oil/water/gas or gas/water).

According to a preferred embodiment, the additive concentrate and the composition of the invention are used for scavenging hydrogen sulphide (H₂S) and mercaptans (compounds of formula RSH) in a hydrocarbon containing stream.

The mercaptans which are eliminated are typically those of formula RSH wherein R is an alkyl or alkenyl group containing from 1 to 8, preferably from 1 to 6 and more preferably from 1 to 4 carbon atoms.

The hydrocarbon containing streams are typically selected from crude petroleum oils, hydrocarbon fractions and residues deriving from the distillation thereof, light petroleum gas (LPG) and natural gas, as well as mixtures thereof with aqueous phases such as brine.

Such streams contain H₂S and/or mercaptans in total amounts which may range for example from 1 to 10 000 ppm by weight.

The present invention also concerns the use of alkoxylated fatty amines as defined above for improving the efficiency of an oxazolidine compound for scavenging hydrogen sulphide (H₂S) and/or mercaptans in hydrocarbon streams.

### Method

The present invention also relates to a method for scavenging hydrogen sulphide and/or organic compounds comprising at least one sulfhydryl group such as mercaptans in a liquid or gaseous stream comprising contacting said stream with the additive concentrate or with the composition of the invention.

As described above, the liquid or gaseous stream may be monophasic such as in particular an aqueous stream or an organic stream, or multiphasic such as a stream containing both water and hydrocarbons (such as for instance oil/water or oil/water/gas or gas/water).

According to a preferred embodiment, the stream contains hydrocarbons. The stream may be especially selected from crude petroleum oils, hydrocarbon fractions and residues deriving from the distillation thereof such as in particular fuel oils and heavy fuel oils, light petroleum gas (LPG) and natural gas, as well as mixtures thereof with aqueous compositions such as brine.

The amount of additive concentrate or composition used per amount of stream depends on the concentration of said oxazolidine compound(s) and ethoxylated fatty amine(s) in the composition as well as the total content of hydrogen sulphide and/or organic compounds comprising at least one sulfhydryl group in the liquid or gaseous stream, as explained above.

The concentrate or the composition is contacted with the liquid or gaseous stream for a time sufficient to achieve an effective scavenging of hydrogen sulphide and of organic compounds comprising at least one sulfhydryl group.

The example hereafter only aims at illustrating the present invention, and shall not be interpreted so as to limit its scope.

### Examples

### Compositions

Compositions A1 to A6 (according to the invention) and C1 to C5 (comparatives) were prepared by mixing ingredients as detailed in Table 1 and Table 2 below:

**Table 1**

| | A1 | A2 | A3 | A4 | A5 | A6 |
|---|---|---|---|---|---|---|
| MBO | 70 | 70 | 70 | 70 | 70 | 70 |
| Ethoxylated tallow amine (5 EO) | 30 | - | - | - | - | - |
| Ethoxylated tallow amine (10 EO) | - | 30 | - | - | - | - |
| Ethoxylated stearyl amine (10 EO) | - | - | 30 | - | - | - |
| Ethoxylated coco amine (10 EO) | - | - | - | 30 | - | - |
| Ethoxylated Oleyl Amine (2 EO) | - | - | - | - | 30 | - |
| Ethoxylated Oleyl Amine (5 EO) | | | | | - | 30 |

**Table 2**

| | C1 | C2 | C3 | C4 | C5 |
|---|---|---|---|---|---|
| MBO | 70 | - | - | - | - |
| Butyl Carbitol | 30 | - | - | - | - |
| Ethoxylated tallow amine (5 EO) | - | 100 | - | - | - |
| Ethoxylated tallow amine (10 EO) | - | - | 100 | - | - |
| Ethoxylated stearyl amine (10 EO) | - | - | - | 100 | - |
| Ethoxylated coco amine (10 EO) | - | - | - | - | 100 |

### Assessment of H₂S scavenging ability

The test was carried out at room temperature. A 250 mL glass purger was charged with 100 mL of an inert solvent. A gas consisting of N₂ containing H₂S at a concentration of 50 ppm was released by a bubbling tube at a flow rate of 0.4 mL/min into the solvent contained in said purger. The solvent was continuously agitated by using a magnetic stirrer. The gas exiting the solvent and leaving the purger was conveyed to a H₂S detector.

At the beginning of each test, a setup was made as follows: the gas (H₂S in N₂ at a concentration of 50 ppm) was passed through the purger with a 0.4 mL/min flow rate, and the H₂S detector started recording the H₂S concentration at the outlet of the purger. Once the outlet H₂S concentration remained stable (with a value of 50 ppm constant reading at the detector), the scavenging composition (1ml of said composition is mixed with 2ml of butyl carbitol to ensure proper injection into the reactor) to be tested was quickly injected into the purger. As the scavenging composition starts reacting with H₂S which results in a reduction of the H₂S concentration at the outlet, as recorded by the detector. The H₂S concentration was recorded at every 5 sec time interval.

An interval of time of 30 min was respected between each test. In each test, once the H₂S scavenger has been injected into the purger, the concentration of H₂S recorded by the detector started decreasing from 50 ppm down towards 0 ppm, depending on the efficiency of the scavenging composition. The higher the H₂S scavenging efficiency of the composition, the faster the H₂S concentration recorded by the detector drops and the longer the rate of H₂S concentration recorded by the detector remains low. It was also observed that, once the scavenging composition was consumed, the concentration of H₂S recorded by the detector started increasing slowly back to 50 ppm.

### Results

The results obtained are detailed in the Table below:

| Tested composition | Max H2S Scavenging Obtained (in %) | Time required to achieve max H2S scavenging (in sec) | H2S Scavenging Obtained (in %) at the end of the test (1800 sec) |
|---|---|---|---|
| A1 | 64 | 110 | 50 |
| A2 | 68 | 110 | 50 |
| A3 | 90 | 100 | 68 |
| A4 | 64 | 110 | 50 |
| C1 | 56 | 190 | 16 |
| C2 | 0 | - | 0 |
| C3 | 0 | - | 0 |
| C4 | 0 | - | 0 |
| C5 | 0 | - | 0 |

The results show that the compositions A1-A4 according to the invention are more efficient in scavenging H2S than comparative composition C1 comprising MBO only or than comparative compositions C2-C5 comprising an alkoxylated amine only. Indeed, the percentage of maximum H2S scavenging is higher and obtained in much less time with the compositions A1-A4. Moreover, the scavenging effect is longer in time, as at the end of the test, the percentage of scavenging obtained with the compositions of the invention is still much higher than with the comparative composition C1. Comparative compositions C2-C5 have no scavenging effect on H2S.

Therefore, the results show a synergic effect between MBO and the alkoxylated amine in the compositions of the invention for scavenging H2S.

## Claims

1. Additive concentrate comprising :
- at least one oxazolidine compound in an amount ranging from 50 to 98%wt relative to the total weight of the additive concentrate, and
- at least one alkoxylated amine in an amount ranging from 2 to 50%wt relative to the total weight of the additive concentrate.

2. Additive concentrate as defined in claim 1, wherein the oxazolidine compound(s) is (are) chosen from compounds comprising one oxazolidine cycle (i.e. mono-oxazolidines) or two oxazolidine cycles (i.e. bisoxazolidines), preferably from 1,3-oxazolidine, 5-methyloxazolidine, 3-(C1-C20)alkyl-oxazolidines, 3,3'-methylenebis(oxazolidine), 3,3'-methylenebis(5-methyloxazolidine) (MBO) and mixtures thereof.

3. Additive concentrate as defined in any preceding claim, wherein the oxazolidine compound(s) is (are) present in an amount ranging from 60 to 80%wt, preferably from 65 to 75%wt, more preferably from 68 to 72%wt, relative to the total weight of the additive concentrate.

4. Additive concentrate as defined in any preceding claim, wherein the alkoxylated amine(s) correspond to the following general formula (I): 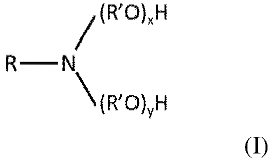 wherein:
- R represents a linear or branched hydrocarbon chain comprising from 1 to 30 carbon atoms, preferably from 6 to 30 carbon atoms, more preferably from 8 to 30 carbon atoms,
- R' represents an alkylene group comprising from 1 to 4 carbon atoms, preferably from 2 to 3 carbon atoms, more preferably R' represents an ethylene group or a propylene group, and
- x and y are numbers ranging from 0 to 15, with the proviso that x+y is within the range from 2 to 20, preferably from 5 to 15.

5. Additive concentrate as defined in any preceding claim, wherein the alkoxylated amine(s) is (are) chosen from ethoxylated fatty amines of the following general formula (II): 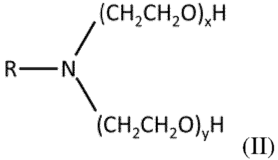 wherein R represents a linear or branched hydrocarbon chain comprising from 8 to 30 carbon atoms, preferably from 12 to 24 carbon atoms, and x+y is within the range from 2 to 20, preferably from 5 to 15.

6. Additive concentrate as defined in any preceding claim, wherein the alkoxylated amine(s) is (are) chosen from ethoxylated tallow amines containing an average number of ethoxy units ranging from 5 to 15, ethoxylated stearyl amines containing an average number of ethoxy units ranging from 5 to 15, ethoxylated coco amines containing an average number of ethoxy units ranging from 5 to 15, ethoxylated oleyl amines containing an average number of ethoxy units ranging from 2 to 10, and mixtures thereof.

7. Additive concentrate as defined in any preceding claim, wherein the alkoxylated amine(s) is (are) present in an amount ranging from 20 to 40%wt, preferably from 25 to 35%wt, more preferably from 28 to 32%wt, relative to the total weight of the additive concentrate.

8. Additive concentrate as defined in any preceding claim, wherein the weight ratio between the total amount of oxazolidine compound(s) and the total amount of alkoxylated amine(s) is at least 1, preferably at least 1.5; more preferably said weight ratio ranges from 1 to 20, in particular from 1 to 15, more particularly from 1 to 10, preferably from 1 to 4, and more preferably from 2 to 3.

9. Composition comprising an additive concentrate as defined in any preceding claim and at least one liquid solvent, preferably chosen from aromatic solvents, poly oxyalkyl ethers, heavy naphtas and organic solvents derived from biomass, more preferably from oils of vegetable origin, and even more preferably from cashew nutshell liquid and mixtures thereof with other organic solvents.

10. Composition as defined in claim 9, wherein the solvent(s) is (are) present in an amount ranging from 5 to 50% by weight, preferably from 10 to 40%wt, more preferably from 25 to 30%wt, relative to the total weight of the composition.

11. Composition as defined in anyone of claims 9 or 10, wherein the additive concentrate is present in an amount ranging from 50 to 95% by weight, preferably from 60 to 90%wt, more preferably from 70 to 75%wt, relative to the total weight of the composition.

12. Composition as defined in anyone of claims 9 to 11 further comprising at least one defoamer, preferably chosen from polydimethylsiloxane polymers, more preferably from grafted polydimethylsiloxane polymers.

13. Use of an additive concentrate as defined in anyone of claims 1 to 8 or of a composition as defined in anyone of claims 9 to 12 for scavenging hydrogen sulphide and/or organic compounds comprising at least one sulfhydryl group such as mercaptans in a liquid or gaseous stream.

14. Use of an alkoxylated amine as defined in anyone of claims 1 and 4 to 7 for improving the efficiency of an oxazolidine compound for scavenging hydrogen sulphide (H₂S) and/or organic compounds comprising at least one sulfhydryl group such as mercaptans in a liquid or gaseous stream, preferably in a hydrocarbon streams.

15. Method for scavenging hydrogen sulphide and/or organic compounds comprising at least one sulfhydryl group such as mercaptans in a liquid or gaseous stream, comprising contacting said stream with an additive concentrate as defined in anyone of claims 1 to 8 or of a composition as defined in anyone of claims 9 to 12.

## Patentansprüche

1. Additivkonzentrat, umfassend:
- mindestens eine Oxazolidin-Verbindung in einer Menge im Bereich von 50 bis 98 Gew.-%, bezogen auf das Gesamtgewicht des Additivkonzentrats, und
- mindestens ein alkoxyliertes Amin in einer Menge im Bereich von 2 bis 50 Gew.-%, bezogen auf das Gesamtgewicht des Additivkonzentrats.

2. Additivkonzentrat nach Anspruch 1, wobei die Oxazolidin-Verbindung(en) aus Verbindungen, die einen Oxazolidinring umfassen (d. h. Monooxazolidine) oder zwei Oxazolidinringe umfassen (d. h. Bisoxazolidine), bevorzugt aus 1,3-Oxazolidin, 5-Methyloxazolidin, 3-(C1-C20)Alkyloxazolidinen, 3,3'-Methylenbis(oxazolidin), 3,3'-Methylenbis(5-methyloxazolidin) (MBO) und Mischungen davon, gewählt ist (sind).

3. Additivkonzentrat nach einem vorhergehenden Anspruch, wobei die Oxazolidin-Verbindung(en) in einer Menge im Bereich von 60 bis 80 Gew.-%, bevorzugt von 65 bis 75 Gew.-%, bevorzugter von 68 bis 72 Gew.-%, bezogen auf das Gesamtgewicht des Additivkonzentrats, vorliegt (vorliegen).

4. Additivkonzentrat nach einem vorhergehenden Anspruch, wobei die ein oder mehreren alkoxylierten Amine der folgenden allgemeinen Formel (I) entsprechen: 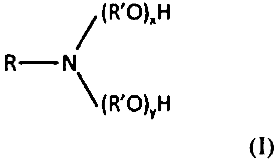 wobei:
- R für eine lineare oder verzweigte Kohlenwasserstoffkette steht, die 1 bis 30 Kohlenstoffatome, bevorzugt 6 bis 30 Kohlenstoffatome und bevorzugter 8 bis 30 Kohlenstoffatome umfasst,
- R' für eine Alkylengruppe steht, die 1 bis 4 Kohlenstoffatome, bevorzugt 2 bis 3 Kohlenstoffatome umfasst, bevorzugter R' für eine Ethylengruppe oder eine Propylengruppe steht und
- x und y Zahlen im Bereich von 0 bis 15 bedeuten, mit der Maßgabe, dass x+y im Bereich von 2 bis 20, bevorzugt von 5 bis 15, liegt.

5. Additivkonzentrat nach einem vorhergehenden Anspruch, wobei das alkoxylierte Amin (die alkoxylierten Amine) aus ethoxylierten Fettaminen der folgenden allgemeinen Formel (II) gewählt ist (sind): 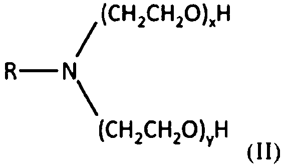 wobei R für eine lineare oder verzweigte Kohlenwasserstoffkette steht, die 8 bis 30 Kohlenstoffatome, bevorzugt 12 bis 24 Kohlenstoffatome umfasst, und x+y im Bereich von 2 bis 20, bevorzugt von 5 bis 15, liegt.

6. Additivkonzentrat nach einem vorhergehenden Anspruch, wobei das alkoxylierte Amin (die alkoxylierten Amine) aus ethoxylierten Talgaminen mit einer durchschnittlichen Anzahl von Ethoxy-Einheiten im Bereich von 5 bis 15, ethoxylierten Stearylaminen mit einer durchschnittlichen Anzahl von Ethoxy-Einheiten im Bereich von 5 bis 15, ethoxylierten Cocoaminen mit einer durchschnittlichen Anzahl von Ethoxy-Einheiten im Bereich von 5 bis 15, ethoxylierten Oleylaminen mit einer durchschnittlichen Anzahl von Ethoxy-Einheiten im Bereich von 2 bis 10 und Mischungen davon gewählt ist (sind).

7. Additivkonzentrat nach einem vorhergehenden Anspruch, wobei das alkoxylierte Amin (die alkoxylierten Amine) in einer Menge im Bereich von 20 bis 40 Gew.-%, bevorzugt von 25 bis 35 Gew.-%, bevorzugter von 28 bis 32 Gew.-%, bezogen auf das Gesamtgewicht des Additivkonzentrats, vorliegt (vorliegen).

8. Additivkonzentrat nach einem vorhergehenden Anspruch, wobei das Gewichtsverhältnis zwischen der Gesamtmenge an Oxazolidin-Verbindung(en) und der Gesamtmenge an alkoxyliertem Amin(alkoxylierten Aminen) mindestens 1, bevorzugt mindestens 1,5 beträgt; bevorzugter liegt das Gewichtsverhältnis im Bereich von 1 bis 20, insbesondere von 1 bis 15, ganz besonders von 1 bis 10, bevorzugt von 1 bis 4 und bevorzugter von 2 bis 3.

9. Zusammensetzung, umfassend ein Additivkonzentrat nach einem vorhergehenden Anspruch und mindestens ein flüssiges Lösungsmittel, bevorzugt gewählt aus aromatischen Lösungsmitteln, Polyoxyalkylethern, schweren Naphtha-Fraktionen und von Biomasse gewonnenen organischen Lösungsmitteln, bevorzugter aus Ölen pflanzlichen Ursprungs und noch bevorzugter aus Cashew-Nussschalenflüssigkeit und Mischungen davon mit anderen organischen Lösungsmitteln.

10. Zusammensetzung nach Anspruch 9, wobei das (die) Lösungsmittel in einer Menge im Bereich von 5 bis 50 Gew.-%, bevorzugt von 10 bis 40 Gew.-%, bevorzugter von 25 bis 30 Gew.-%, bezogen auf das Gesamtgewicht der Zusammensetzung, vorliegt (vorliegen).

11. Zusammensetzung nach einem der Ansprüche 9 oder 10, wobei das Additivkonzentrat in einer Menge im Bereich von 50 bis 95 Gew.-%, bevorzugt von 60 bis 90 Gew.-%, bevorzugter von 70 bis 75 Gew.-%, bezogen auf das Gesamtgewicht der Zusammensetzung, vorliegt.

12. Zusammensetzung nach einem der Ansprüche 9 bis 11, ferner umfassend mindestens einen Entschäumer, bevorzugt gewählt aus Polydimethylsiloxanpolymeren, bevorzugter aus gepfropften Polydimethylsiloxanpolymeren.

13. Verwendung eines Additivkonzentrats nach einem der Ansprüche 1 bis 8 oder einer Zusammensetzung nach einem der Ansprüche 9 bis 12 zum Abfangen von Schwefelwasserstoff und/oder von mindestens eine Sulfhydrylgruppe umfassenden organischen Verbindungen wie Mercaptanen in einem Flüssigkeits- oder Gasstrom.

14. Verwendung eines alkoxylierten Amins nach einem der Ansprüche 1 und 4 bis 7 zur Verbesserung der Effizienz einer Oxazolidin-Verbindung zum Abfangen von Schwefelwasserstoff (H₂S) und/oder von mindestens eine Sulfhydrylgruppe umfassenden organischen Verbindungen wie Mercaptanen in einem Flüssigkeits- oder Gasstrom, bevorzugt in einem Kohlenwasserstoffstrom.

15. Verfahren zum Abfangen von Schwefelwasserstoff und/oder von mindestens eine Sulfhydrylgruppe umfassenden organischen Verbindungen wie Mercaptanen in einem Flüssigkeits- oder Gasstrom, umfassend das Inkontaktbringen des Stroms mit einem Additivkonzentrat nach einem der Ansprüche 1 bis 8 oder einer Zusammensetzung nach einem der Ansprüche 9 bis 12.

## Revendications

1. Concentré d'additif comprenant :
- au moins un composé oxazolidine en une quantité allant de 50 à 98 % en poids par rapport au poids total du concentré d'additif, et
- au moins une amine alcoxylée en une quantité allant de 2 à 50 % en poids par rapport au poids total du concentré d'additif.

2. Concentré d'additif tel que défini dans la revendication 1, dans lequel le ou les composés oxazolidine est (sont) choisi(s) parmi les composés comprenant un cycle oxazolidine (c'est-à-dire mono-oxazolidines) ou deux cycles oxazolidine (c'est-à-dire bisoxazolidines), de préférence parmi le 1,3-oxazolidine, le 5-méthyloxazolidine, les 3-(C1-C20)alkyl-oxazolidines, le 3,3'-méthylènebis(oxazolidine), le 3,3'-méthylènebis(5-méthyloxazolidine) (MBO) et leurs mélanges.

3. Concentré d'additif tel que défini dans l'une quelconque des revendications précédentes, dans lequel le ou les composés d'oxazolidine est (sont) présent(s) en une quantité allant de 60 à 80 % en poids, de préférence de 65 à 75 % en poids, plus préférentiellement de 68 à 72 % en poids, par rapport au poids total du concentré d'additif.

4. Concentré d'additif tel que défini dans l'une quelconque des revendications précédentes, dans lequel la ou les amines alcoxylées correspondent à la formule générale (I) suivante : 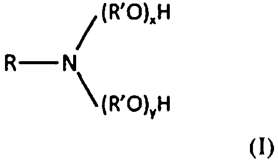 dans laquelle :
- R représente une chaîne hydrocarbonée linéaire ou ramifiée comprenant de 1 à 30 atomes de carbone, de préférence de 6 à 30 atomes de carbone, plus préférentiellement de 8 à 30 atomes de carbone,
- R' représente un groupe alkylène comprenant de 1 à 4 atomes de carbone, de préférence de 2 à 3 atomes de carbone, plus préférentiellement R' représente un groupe éthylène ou un groupe propylène, et
- x et y sont des nombres allant de 0 à 15, sous réserve que x+y soit compris dans la plage de 2 à 20, de préférence de 5 à 15.

5. Concentré d'additif tel que défini dans l'une quelconque des revendications précédentes, dans lequel la ou les amines alcoxylées sont choisies parmi des amines grasses éthoxylées de formule générale (II) suivante : 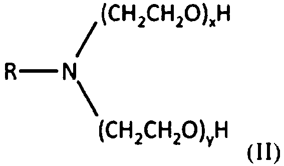 dans laquelle R représente une chaîne hydrocarbonée linéaire ou ramifiée comprenant de 8 à 30 atomes de carbone, de préférence de 12 à 24 atomes de carbone, et x+y est dans la plage de 2 à 20, de préférence de 5 à 15.

6. Concentré d'additif tel que défini dans l'une quelconque des revendications précédentes, dans lequel la ou les amines alcoxylées sont choisies parmi les amines de suif éthoxylées ayant un nombre moyen de motifs éthoxy allant de 5 à 15, les stéarylamines éthoxylées ayant un nombre moyen de motifs éthoxy allant de 5 à 15, les coco-amines éthoxylées ayant un nombre moyen de motifs éthoxy allant de 5 à 15, les oléylamines éthoxylées ayant un nombre moyen de motifs éthoxy allant de 2 à 10, et leurs mélanges.

7. Concentré d'additif tel que défini dans l'une quelconque des revendications précédentes, dans lequel la ou les amines alcoxylées est (sont) présente(s) en une quantité allant de 20 à 40 % en poids, de préférence de 25 à 35 % en poids, plus préférentiellement de 28 à 32 % en poids, par rapport au poids total du concentré d'additif.

8. Concentré d'additif tel que défini dans l'une quelconque des revendications précédentes, dans lequel le rapport pondéral entre la quantité totale de composé(s) oxazolidine et la quantité totale d'amine(s) alcoxylée(s) est d'au moins 1, de préférence d'au moins 1,5 ; plus préférentiellement ledit rapport pondéral va de 1 à 20, en particulier de 1 à 15, plus particulièrement de 1 à 10, préférentiellement de 1 à 4, et plus préférentiellement de 2 à 3.

9. Composition comprenant un concentré d'additif tel que défini dans l'une quelconque des revendications précédentes et au moins un solvant liquide, de préférence choisi parmi les solvants aromatiques, les polyoxyalkyléthers, les naphtas lourds et les solvants organiques dérivés de biomasse, plus préférentiellement parmi les huiles d'origine végétale, et encore plus préférentiellement parmi l'huile de coque de noix de cajou et ses mélanges avec d'autres solvants organiques.

10. Composition telle que définie dans la revendication 9, dans laquelle le ou les solvants est (sont) présent(s) en une quantité allant de 5 à 50 % en poids, de préférence de 10 à 40 % en poids, plus préférentiellement de 25 à 30 % en poids, par rapport au poids total de la composition.

11. Composition telle que définie dans l'une quelconque des revendications 9 ou 10, dans laquelle le concentré d'additif est présent en une quantité allant de 50 à 95 % en poids, de préférence de 60 à 90 % en poids, plus préférentiellement de 70 à 75 % en poids, par rapport au poids total de la composition.

12. Composition telle que définie dans l'une quelconque des revendications 9 à 11, comprenant en outre au moins un agent antimousse, de préférence choisi parmi les polymères polydiméthylsiloxane, plus préférentiellement parmi les polymères polydiméthylsiloxane greffés.

13. Utilisation d'un concentré d'additif tel que défini dans l'une quelconque des revendications 1 à 8 ou d'une composition telle que définie dans l'une quelconque des revendications 9 à 12 pour piéger du sulfure d'hydrogène et/ou des composés organiques comprenant au moins un groupe sulfhydryle tels que des mercaptans dans un flux liquide ou gazeux.

14. Utilisation d'une amine alcoxylée telle que définie dans l'une quelconque des revendications 1 et 4 à 7 pour améliorer l'efficacité d'un composé oxazolidine pour piéger du sulfure d'hydrogène (H₂S) et/ou des composés organiques comprenant au moins un groupe sulfhydryle tels que des mercaptans dans un flux liquide ou gazeux, de préférence dans un flux d'hydrocarbures.

15. Procédé pour piéger du sulfure d'hydrogène et/ou des composés organiques comprenant au moins un groupe sulfhydryle tels que des mercaptans dans un flux liquide ou gazeux, comprenant la mise en contact dudit flux avec un concentré d'additif tel que défini dans l'une quelconque des revendications 1 à 8 ou une composition telle que définie dans l'une quelconque des revendications 9 à 12.
